# EUROPÄISCHE PATENTSCHRIFT

(11) **EP 4 083 353 B1**
(45) Veröffentlichungstag und Bekanntmachung des Hinweises auf die Patenterteilung: **12.06.2024**
(21) Anmeldenummer: 22153531.3
(22) Anmeldetag: 26.01.2022
(51) Int. Cl.: E05B 9/08, E05B 63/00, E05B 47/06, E05B 15/02, F16B 39/24, F16B 39/36, F16B 5/02, F16B 43/02, E05B 47/00

(54) **RÜCKPLATTENBAUGRUPPE FÜR EINEN TÜRBESCHLAG UND TÜRBESCHLAG**
DOOR FITTING AND BACK PLATE ASSEMBLY FOR A DOOR FITTING
MODULE DE PLAQUE ARRIÈRE POUR UNE FERRURE DE PORTE ET FERRURE DE PORTE

(30) Priorität: 27.04.2021 DE 102021110798
(43) Veröffentlichungstag der Anmeldung: 02.11.2022
(73) Patentinhaber: DOM Sicherheitstechnik GmbH & Co. KG, 50321 Brühl (DE)
(72) Erfinder: Papagelidis, Mario, 50321 Brühl (DE)
(74) Vertreter: Witte, Weller & Partner Patentanwälte mbB

(56) Entgegenhaltungen:
- EP-A1- 3 162 990
- WO-A1-2016/187542
- AT-B- 135 919
- DE-U- 1 904 818
- DE-U1- 29 701 330
- US-A- 5 320 466
- Somfy Activities Sa: "Smartes Türschloss", , 1. Juni 2017 (2017-06-01), Seiten 1-23, XP055934237, Gefunden im Internet: URL:https://downloads.somfy.de/frontend/ge tcatalog.do?catalogId=175553&catalogVersio n=1#page_1 [gefunden am 2022-06-22]

## Beschreibung

Die vorliegende Erfindung betrifft eine Rückplattenbaugruppe für einen Türbeschlag, mit einem ersten Lochpaar, wobei das erste Lochpaar von einem ersten Langloch und einem ersten Schraubenloch gebildet ist, wobei sich das erste Langloch entlang einer Längsmittelebene der Rückplattenbaugruppe erstreckt, und wobei das erste Schraubenloch auf der Längsmittelebene angeordnet ist, einem zweiten Lochpaar, wobei das zweite Lochpaar von einem zweiten Schraubenloch und einem dritten Schraubenloch gebildet ist, wobei das zweite Schraubenloch und das dritte Schraubenloch einander bezüglich der Längsmittelebene gegenüberliegen, einem dritte Lochpaar, wobei das dritte Lochpaar von einem vierten Schraubenloch und einem fünften Schraubenloch gebildet ist, wobei das vierte Schraubenloch und das fünfte Schraubenloch auf der Längsmittelebene und zwischen dem ersten Schraubenloch und dem ersten Langloch angeordnet sind. Des Weiteren betrifft die vorliegende Erfindung einen Türbeschlag mit einer solchen Rückplattenbaugruppe.

Eine Rückplattenbaugruppe für einen Türbeschlag ist etwa aus der Bedienungsanleitung zu dem Produkt "Smartes Türschloss" der Firma somfy, Cluses, Frankreich bekannt, abrufbar unter https://downloads.somfy.de/frontend/getcatalog.do?catalogId=175553&catalogVersion=1 &lang=de.

Derartige Rückplattenbaugruppen dienen dazu, einen Türbeschlag, insbesondere einen elektrischen Sicherheitstürbeschlag, mit einer Tür zu verbinden. Dabei kann die Verbindung mit verschiedenen Anbringungspunkten an der Tür selbst oder an dem dazugehörigen Schließzylinder erfolgen. Häufig sind derartige Türbeschläge als Systeme ausgestaltet, mit denen bestehende Türen und Schließzylinder nachgerüstet werden können. Dabei wird der Schließzylinder ausgetauscht und ein entsprechender Türbeschlag an der Tür montiert.

Die Art und Weise der Befestigung richtet sich dabei nach dem vorher an der Tür vorhandenen Türbeschlag und dem vorgesehenen Befestigungssystem. Die Anbringungspunkte können daher voneinander abweichen. Obwohl die Anbringungspunkte zumindest teilweise genormt sind, liegen dennoch verschiedene Möglichkeiten der Anbringung vor. Zudem können wiederum in verschiedenen Ländern verschiedene Normungen und damit Anbringungspunkte vorliegen.

Es besteht daher ein Bedarf an einer Rückplattenbaugruppe, die sich zur Anbringung an möglichst einer großen Vielzahl verschiedener Türen bzw. zum Nachrüsten einer möglichst großen Anzahl am Markt befindlicher Türbeschläge eignet.

Des Weiteren hat sich gezeigt, dass am Markt ein Bedarf dahingehend besteht, die Sicherheitsklasse eines bestehenden Türbeschlags auch bei dessen Nachrüstung mit einem elektronischen Türbeschlag zu erhalten. Ein relevantes Sicherheitsmerkmal ist dabei die Zugtestsimulation nach DIN EN 1906:2012.

Grundsätzlich wäre es wünschenswert, ggf. die Sicherheitsklasse eines auszutauschenden Türbeschlags zu erhalten, wenn ein Nachrüsten erfolgt. Es hat sich jedoch gezeigt, dass in Fällen, in denen die Rückplattenbaugruppe mit einer Vielzahl von Durchbrechungen versehen ist, um eine möglichst große Kompatibilität für viele Anbringungsarten aufzuweisen, die Festigkeit abnehmen kann. Unter Umständen können dann maximal erlaubte Verformungen im Rahmen der Zugtestsimulation nach DIN EN 1906:2012 überschritten werden und vorher vorhandene Sicherheitsklasse verloren gehen.

Es ist eine Aufgabe der vorliegenden Erfindung, eine Rückplattenbaugruppe bereitzustellen, die eine möglichst große Flexibilität hinsichtlich möglicher Anbringungsarten aufweist und gleichzeitig eine möglichst hohe Festigkeit bereitstellt.

Gemäß einem ersten Aspekt der Erfindung wird daher eine Rückplattenbaugruppe für einen Türbeschlag bereitgestellt, mit einem ersten Lochpaar, wobei das erste Lochpaar von einem ersten Langloch und einem ersten Schraubenloch gebildet ist, wobei sich das erste Langloch entlang einer Längsmittelebene der Rückplattenbaugruppe erstreckt, und wobei das erste Schraubenloch auf der Längsmittelebene angeordnet ist, einem zweiten Lochpaar, wobei das zweite Lochpaar von einem zweiten Schraubenloch und einem dritten Schraubenloch gebildet ist, wobei das zweite Schraubenloch und das dritte Schraubenloch einander bezüglich der Längsmittelebene gegenüberliegen, einem dritten Lochpaar, wobei das dritte Lochpaar von einem vierten Schraubenloch und einem fünften Schraubenloch gebildet ist, wobei das vierte Schraubenloch und das fünfte Schraubenloch auf der Längsmittelebene und zwischen dem ersten Schraubenloch und dem ersten Langloch angeordnet sind, einem vierten Lochpaar, wobei das vierte Lochpaar von einem sechsten Schraubenloch und einem siebten Schraubenloch gebildet ist, wobei das sechste Schraubenloch und das siebte Schraubenloch einander bezüglich der Längsmittelebene gegenüberliegen, und wobei ein Abstand zwischen dem sechsten Schraubenloch und dem siebten Schraubenloch kleiner ist als ein Abstand zwischen dem zweiten Schraubenloch und dem dritten Schraubenloch, und einem zweiten Langloch, das sich entlang der Längsmittelebene der Rückplattenbaugruppe erstreckt, wobei das zweite Langloch auf einer dem ersten Schraubenloch abgewandten Seite des ersten Langlochs angeordnet ist.

Auf diese Weise wird bereits eine Verbesserung der Festigkeit der Rückplattenbaugruppe bereitgestellt. Insbesondere die Anbringung an Anbringungspunkten entlang einer Längsmittelebene erfordert dort eine relativ hohe Flexibilität in den Anbringungspunkten. Es hat sich jedoch gezeigt, dass eine durchgehende Ausnehmung bzw. ein sich über einen großen Bereich der Rückplattenbaugruppe erstreckendes Langloch zu Festigkeitsproblemen führen kann. Die Ausgestaltung mittels zweier Langlöcher ermöglicht hier das Verbleiben eines Materialstegs zwischen dem ersten und dem zweiten Langloch und eine verbesserte Festigkeit in diesem Bereich.

Unter der "Längsmittelebene" wird im Rahmen der vorliegenden Offenbarung eine Ebene verstanden, die die Breite der Rückplattenbaugruppe halbiert und sich parallel zu der Tiefenrichtung der Bohrungen für die Schrauben erstreckt. Im eingebauten Zustand des Türbeschlags steht diese Längsmittelebene somit senkrecht auf der Tür und halbiert die Breite der Rückplattenbaugruppe. Möglicherweise weist sowohl der Türbeschlag als auch die Rückplattenbaugruppe als auch ein Rückplattenelement der Rückplattenbaugruppe eine längliche Form auf. Diese ist im Wesentlichen rechteckig. Insbesondere ist ein Betätigungsdrehknauf an einem Ende angeordnet. Die längere Dimension ist dabei die Längsrichtung und die kürzere Dimension die Breitenrichtung. Die Längsmittelebene erstreckt sich dann parallel zu der Längsrichtung und parallel zu der auf der Längsrichtung oder Breitenrichtung senkrecht stehenden Tiefenrichtung. Angeordnet ist die Längsmittelebene dann derart, dass sie die maximale Breite der Rückplattenbaugruppe bzw. des Rückplattenelements halbiert.

Gemäß einem zweiten Aspekt der vorliegenden Erfindung wird eine Rückplattenbaugruppe für einen Türbeschlag bereitgestellt mit einem ersten Lochpaar, wobei das erste Lochpaar von einem ersten Langloch und einem ersten Schraubenloch gebildet ist, wobei sich das erste Langloch entlang einer Längsmittelebene der Rückplattenbaugruppe erstreckt, und wobei das erste Schraubenloch auf der Längsmittelebene angeordnet ist, einem zweiten Lochpaar, wobei das zweite Lochpaar von einem zweiten Schraubenloch und einem dritten Schraubenloch gebildet ist, wobei das zweite Schraubenloch und das dritte Schraubenloch einander bezüglich der Längsmittelebene gegenüberliegen, einem dritten Lochpaar, wobei das dritte Lochpaar von einem vierten Schraubenloch und einem fünften Schraubenloch gebildet ist, wobei das vierte Schraubenloch und das fünfte Schraubenloch auf der Längsmittelebene und zwischen dem ersten Schraubenloch und dem ersten Langloch angeordnet sind, und wobei die Rückplattenbaugruppe ein Rückplattenelement und eine Verstärkungsplatte aufweist, wobei die Verstärkungsplatte an dem Rückplattenelement befestigt ist, wobei die Verstärkungsplatte zumindest das erste Langloch des ersten Lochpaars und das zweite Lochpaar aufweist, wobei das Rückplattenelement das erste Schraubenloch des ersten Lochpaars und das dritte Lochpaar aufweist, und wobei das Rückplattenelement zumindest in Bereichen, die mit dem ersten Langloch des ersten Lochpaars und dem zweiten Lochpaar fluchten, ausgespart ist.

Eine verbesserte Festigkeit der Rückplattenbaugruppe kann auch bereitgestellt werden, indem die Rückplattenbaugruppe aus einem Rückplattenelement und einer Verstärkungsplatte gebildet wird. Die Verstärkungsplatte kann dabei aus einem Material hergestellt sein, das von dem des Rückplattenelements verschieden ist. Insbesondere kann dieses Material der Verstärkungsplatte eine höhere Zugfestigkeit aufweisen. Beispielsweise kann gehärteter Stahl als Material der Verstärkungsplatte vorgesehen sein. Insbesondere das erste Langloch und das zweite Lochpaar können dann in dieser Verstärkungsplatte angeordnet sein. Das Rückplattenelement ist dann in entsprechenden, mit diesen Lochpaaren bzw. dem Langloch in Tiefenrichtung bzw. in Bohrungsrichtung fluchtenden Bereichen ausgespart. Die Verstärkungsplatte selbst ist dann wiederum an dem Rückplattenelement befestigt. Die Befestigung kann beispielsweise kann mittels Schrauben geschehen.

Es hat sich gezeigt, dass die durch ein Langloch geführten Schrauben, die beispielsweise Senkkopfschrauben sind, keine ausreichende Auflagefläche zur Verteilung der entstehenden Presskräfte auf die Rückplattenbaugruppe bereitstellen können. Aufgrund der Form des Langlochs liegen die Schraubenköpfe, wenn sie in einem mittleren Abschnitt des Langlochs angeordnet sind, lediglich an zwei Flanken des Langlochs an, jedoch nicht über den gesamten Kreisumfang. Dem kann u.a. damit entgegengewirkt werden, insbesondere den Bereich des Langlochs in einem Einsatzelement, hier der Verstärkungsplatte, auszubilden, das dann wiederum mit dem Rückplattenelement verbunden ist. Die Verstärkungsplatte kann dabei insbesondere aus einem hochfesten Material ausgebildet sein, so dass trotz allem eine, auch bei einer Befestigung über das Langloch, hinreichende Festigkeit erzielt werden kann. Insbesondere kann es so ermöglicht werden, im Rahmen der Zugtestsimulation nach DIN EN 1906:2012 eine Festigkeit bereitzustellen, die die Anforderung der Gebrauchsklasse 2 erfüllt. Es wird dann möglich, Türbeschläge, die die Anforderungen dieser Gebrauchsklasse erfüllen, adäquat mittels des elektronischen Türbeschlags nachzurüsten, ohne dabei die Sicherheitsklasse zu verlieren.

Gemäß einem dritten Aspekt der Erfindung wird eine Rückplattenbaugruppe für einen Türbeschlag gemäß dem ersten oder dem zweiten Aspekt der Erfindung bereitgestellt, wobei die Rückplattenbaugruppe des Weiteren mindestens eine konische Einsatzscheibe aufweist.

Eine "konische Einsatzscheibe" ist konisch ausgebildet, d.h. ihre Innenumfangsfläche verjüngt sich von einer Seite Einsatzscheibe in Richtung der entgegengesetzten Seite der Einsatzscheibe. Auf diese Weise ist die konischen Einsatzscheibe der Form eines Senckopfs einer Schraube angepasst. Der Außenumfang der Einsatzscheibe kann sich ebenfalls verjüngen, insbesondere parallel zu dem Innenumfang. Es ist jedoch bevorzugt, wenn der Außenumfang einen konstanten Außendurchmesser aufweist. Auf diese Weise hat die Einsatzscheibe die Form einer Hülse bzw. kurzen Hülse mit einer sich verjüngenden Innenumfangsfläche. Auch können die konischen Einsatzscheiben insbesondere aus einem hochfesten Material, insbesondere aus gehärtetem Stahl, ausgebildet sein. Mittels der konischen Einsatzscheiben kann, beispielsweise in Schraubenlöchern, insbesondere in den Langlöchern, eine Auflagefläche des Senkkopfs an der befestigten Schraube über deren gesamten Umfang bereitgestellt werden und die Flächenpressung auf den die gesamte Auflagefläche des Senkkopfs verteilt werden. Insbesondere kann ein erste Paar von konischen Einsatzscheiben vorgesehen sein. Das erste Paar von konischen Einsatzscheiben kann beispielsweise in dem ersten Schraubenloch des ersten Lochpaars und dem ersten Langloch des ersten Lochpaars angeordnet sein. Es kann beispielsweise auch in dem zweiten Schraubenloch und dem dritten Schraubenloch des zweiten Lochpaars vorgesehen sein.

Auch mittels der konischen Einsatzscheiben kann so die Festigkeit der Rückplattenbaugruppe erhöht und bei der Zugtestsimulation nach DIN EN 1906:2012 ein Ergebnis erreicht werden, das Anforderungen beispielsweise der Gebrauchsklasse 2 genügt. So kann auch mittels einer solchen Maßnahme erreicht werden, dass Türbeschläge, die die Gebrauchsklasse 2 der Zugtestsimulation nach DIN EN 1906:2012 erfüllen, adäquat unter Erhaltung der Gebrauchsklasse getauscht werden können.

Gemäß einem vierten Aspekt wird der Türbeschlag mit einer Rückplattenbaugruppe nach einem von dem ersten Aspekt, dem zweiten Aspekt und dem dritten Aspekt oder einer ihrer Ausgestaltungen vorgeschlagen.

Die eingangs gestellte Aufgabe wird daher vollkommen gelöst.

In einer Ausgestaltung der Rückplattenbaugruppe kann vorgesehen sein, dass die Rückplattenbaugruppe ein Rückplattenelement aufweist, das einstückig ausgebildet ist, und wobei das Rückplattenelement das erste Lochpaar, das zweite Lochpaar, das dritte Lochpaar und das vierte Lochpaar aufweist.

Auf diese Weise können alle Lochpaare in dem einstückig hergestellten Rückplattenelement bereitgestellt sein. Aufgrund der Ausgestaltung mittels zweier Langlöcher kann hier bereits eine ausreichende Festigkeit gegeben sein.

In einer weiteren Ausgestaltung kann vorgesehen sein, dass die Rückplattenbaugruppe ein Rückplattenelement und eine Verstärkungsplatte aufweist, wobei die Verstärkungsplatte an dem Rückplattenelement befestigt ist, wobei die Verstärkungsplatte zumindest das erste Langloch des ersten Lochpaars und das zweite Lochpaar aufweist, wobei das Rückplattenelement das erste Schraubenloch des ersten Lochpaars und das dritte Lochpaar aufweist, und wobei das Rückplattenelement zumindest in Bereichen, die mit dem ersten Langloch des ersten Lochpaars und dem zweiten Lochpaar fluchten, ausgespart ist.

In dieser Ausgestaltung ist das Rückplattenelement mit weniger Bohrungen versehen. Stattdessen ist eine Verstärkungsplatte, insbesondere aus einem Material verschieden von dem des Rückplattenelements, bereitgestellt, das zumindest das erste Langloch des ersten Lochpaars und das zweite Lochpaar aufweist. Das Rückplattenelement ist dann in den Bereichen, in denen die Verstärkungsplatte die Schraubenlöcher bzw. das Langloch bereitstellt bzw. in einem Bereich, der mit diesen Löchern fluchtet, ausgespart. In den Bereichen von Löchern, die eine höhere Festigkeit erfordern, insbesondere im Bereich des ersten Langlochs, ist daher die Verstärkungsplatte bereitgestellt, was die Festigkeitseigenschaften der Rückplattenbaugruppe weiter verbessert.

In einer weiteren Ausgestaltung kann vorgesehen sein, dass die Verstärkungsplatte des Weiteren das vierte Lochpaar aufweist. Insbesondere kann dabei vorgesehen sein, dass das Rückplattenelement in Bereichen, die mit dem vierten Lochpaar fluchten, ausgespart ist.

Auf diese Weise kann auch das vierte Lochpaar, das ebenfalls aus zwei Schraubenlöchern gebildet ist, die einander bezüglich der Längsmittelebene gegenüberliegen, Verstärker mit höherer Festigkeit bereitgestellt sein. Insbesondere wenn das vierte Lochpaar in der Nähe des zweiten Lochpaars angeordnet ist, können diese somit beide in der Verstärkungsplatte mit hoher Festigkeit bereitgestellt sein.

In einer weiteren Ausgestaltung kann vorgesehen sein, dass die Verstärkungsplatte an dem Rückplattenelement mittels einer Mehrzahl von Schrauben befestigt ist.

Auf diese Weise kann eine geeignete Befestigung der Verstärkungsplatte an dem Rückplattenelement erzielt werden. Hierzu kann beispielsweise das Rückplattenelement Bohrungen aufweisen, die ein Gewinde aufweisen können oder aber ohne Gewinde ausgebildet sein können. Die Schrauben können beispielsweise Senkkopfschrauben sein, die sich in entsprechende Schraubenbohrungen in der Verstärkungsplatte einlegen und in das Rückplattenelement gedreht werden.

In einer weiteren Ausgestaltung kann vorgesehen sein, dass die Rückplattenbaugruppe mindestens eine konische Einsatzscheibe aufweist.

Mittels einer konischen Einsatzscheibe kann weiter die Festigkeit der zusammengebauten Rückplattenbaugruppe verstärkt werden. Im Falle der Befestigung der Rückplattenbaugruppe über Befestigungsschrauben mit einem Senkkopf an einer Tür dient eine konische Einsatzscheibe dazu, über die gesamte Umfangsfläche des Senkkopfs einer Auflage an der konischen Einsatzscheibe bereitzustellen. Des Weiteren kann die konische Einsatzscheibe aus einem anderen Material als das Rückplattenelement bereitgestellt sein, beispielsweise aus einem hochfesten Material, wie etwa gehärtetem Stahl. Auf diese Weise kann eine hohe, gleichmäßig verteilte Flächenpressung bereitgestellt werden und es können verbesserte Ergebnisse bei der Zugtestsimulation nach DIN EN 1906:2012 erzielt werden. Eine konische Einsatzscheibe meint, dass der Innendurchmesser der Einsatzscheibe in Tiefenrichtung gegenüber dem Außendurchmesser in die Tiefe versetzt ist. Die Innenumfangsfläche verjüngt sich von einer Seite der Einsatzscheibe in Richtung ihrer entgegengesetzten Scheibe. Auf der Innenumfangsfläche der Einsatzscheibe, d.h. der Anlagefläche an die jeweilige Befestigungsschraube, liegt damit eine Form komplementär zu der eines Senkkopfs einer Befestigungsschraube vor. Insbesondere kann mindestens ein erstes Paar von konischen Einsatzscheiben vorgesehen sein.

In einer Ausgestaltung kann vorgesehen sein, dass ein erstes Paar von konischen Einsatzscheiben in dem zweiten Lochpaar angeordnet ist.

Auf diese Weise kann eine Befestigung über das zweite Lochpaar erfolgen und dabei eine hohe Festigkeit erhalten bleiben. Bei der Befestigung über das zweite Lochpaar eignet sich im Besonderen, wie im Folgenden noch erläutert wird, zum Nachrüsten im Falle von vormals vorhandenen runden Türbeschlägen.

In einer weiteren Ausgestaltung kann vorgesehen sein, dass ein erstes Paar von konischen Einsatzscheiben in dem ersten Lochpaar angeordnet ist.

Auf diese Weise kann entsprechend eine höhere Festigkeit bei der Befestigung über das erste Lochpaar bereitgestellt werden. Bei dem ersten Lochpaar erfolgt die Befestigung über das erste Schraubenloch des ersten Lochpaars und über das erste Langloch. Eine derartige Befestigung erfolgt beispielsweise, wenn ein vormals ovaler Türbeschlag ersetzt wird oder ein Türbeschlag in Form eine Stange, die an zwei vertikal übereinander versetzten Punkten angebracht ist. Mittels des Langlochs kann hier eine geeignete Entfernung zwischen dem ersten Schraubenloch und dem zweiten Anbringungspunkt in dem ersten Langloch eingestellt werden.

In einer weiteren Ausgestaltung kann vorgesehen sein, dass ein zweites Paar von konischen Einsatzscheiben in dem ersten Lochpaar angeordnet ist, insbesondere wenn das erste Paar von konischen Einsatzscheiben in dem zweiten Lochpaar angeordnet ist.

Die konischen Einsatzscheiben können somit in die auch für mehrere Lochpaare eingelegt sein. Dies kann insbesondere unabhängig davon erfolgen, durch welche Schraubenlöcher bzw. Langlöcher letztendlich Befestigungsschrauben geführt werden.

In einer weiteren Ausgestaltung der Rückplattenbaugruppe kann vorgesehen sein, dass zu dem ersten Langloch zusätzlich zu einer konischen Einsatzscheibe in dem ersten Schraubenloch einer konischen Einsatzscheibe in dem ersten Langloch eine weitere konische Einsatzscheibe in dem ersten Langloch angeordnet ist.

Grundsätzlich kann in bestimmten Anwendungsfällen, beispielsweise beim Besetzen eines vorhandenen Sicherheitstürbeschlags eines bestimmten Herstellers, auch eine Anbringung über zwei Befestigungsschrauben erfolgen, die beide bzw. jeweils durch das erste Langloch geführt sind. Insofern können auch zwei konische Einsatzscheiben im ersten Langloch platziert sein.

In einer weiteren Ausgestaltung kann vorgesehen sein, dass zwischen dem ersten Langloch und dem zweiten Langloch ein Steg ausgebildet ist.

Dieser Steg dient als zusätzliches Material, das eine Festigkeit der Rückplattenbaugruppe verbessern kann. Insbesondere kann vorgesehen sein, dass der Steg in dem Rückplattenelement ausgebildet ist. Auf diese Weise wird die Festigkeit des Rückplattenelements und ein letztes Ergebnis in der Zugsimulation nach DIN EN 1906:2012 erzielt.

In einer weiteren Ausgestaltung kann vorgesehen sein, dass das Rückplattenelement aus einem Material hergestellt ist, das eine Zugfestigkeit von 100 bis 350 MPa aufweist.

Insbesondere kann es sich beispielsweise bei dem verwendeten Material um Zink handeln, das druckgegossen ist. Insbesondere kann als Material eine Zamak-Legierung vorgesehen sein, insbesondere ein Material aus der ZnAl4%-Familie, beispielsweise ZL0400, ZL0410 oder ZL0430. Grundsätzlich ist jedoch auch ein anderes Eisenmaterial bzw. Grauguss möglich. Auf diese Weise kann insbesondere das Rückplattenelement durch diesen bereitgestellt werden, was eine insgesamt kostengünstige Herstellung des Rückplattenelements ermöglicht.

In einer weiteren Ausgestaltung kann vorgesehen sein, dass die Verstärkungsplatte aus einem Material hergestellt ist, das eine Zugfestigkeit von mindestens 380 MPa, vorzugsweise von mehr als 560 MPa aufweist. Vorzugsweise kann vorgesehen sein, dass das Material eine Zugfestigkeit von mehr als 650 MPa aufweist. Weiter vorzugsweise kann vorgesehen sein, dass das Material der Verstärkungsplatte eine Zugfestigkeit von mehr als 800 MPa aufweist. Weiter vorzugsweise kann vorgesehen sein, dass das Material der Verstärkungsplatte eine Zugfestigkeit von mehr als 1000 MPa aufweist.

Beispielsweise kann vorgesehen sein, die Verstärkungsplatte aus Stahl herzustellen. Hierdurch können die gewünschten Bereiche der Zugfestigkeit erreicht werden. Es kann auch gehärteter Stahl als Material vorgesehen sein. Grundsätzlich ist die Herstellung aus gehärtetem Stahl etwas aufwendiger und kostenintensiver, die Zugfestigkeit kann jedoch in den Bereichen der Verstärkungsplatte und damit den dort vorgesehenen Schraubenlöchern bzw. dem Langloch wesentlich erhöht werden. Die Verwendung von derartigen Materialien ermöglicht dann das Erfüllen der Gebrauchsklasse 2 in der Zugtestsimulation nach DIN EN 1906:2012.

In einer weiteren Ausgestaltung kann vorgesehen sein, dass jede Einsatzscheibe aus einem Material hergestellt ist, das eine Zugfestigkeit von mindestens 380 MPa aufweist, insbesondere von mehr als 560 MPa aufweist. Vorzugsweise kann das Material eine Zugfestigkeit von mehr als 650 MPa aufweisen. Weiter vorzugsweise kann jede Einsatzscheibe aus einem Material hergestellt sein, das eine Zugfestigkeit von mehr als 800 MPa aufweist. Weiter vorzugsweise kann eine Zugfestigkeit des Materials, aus dem jede Einsatzscheibe hergestellt ist, mehr als 1000 MPa aufweisen.

Beispielsweise kann als Material für jede Einsatzscheibe Stahl gewählt sein. In einer Ausgestaltung kann jede Einsatzscheibe auch aus dem Stahlmaterial 11 SMn30 hergestellt sein. Dieses weist die Werkstoffnummer 1.0715 auf. Es kann auch ein gehärteter Stahl gewählt sein. Auf diese Weise kann die gewünschte Festigkeit der konischen Einsatzscheibe bereitgestellt werden und die gesamte Festigkeit gemäß der Zugtestsimulation nach DIN EN 1906:2012 erhöht sein.

Gemäß einer weiteren Ausgestaltung kann vorgesehen sein, dass die Rückplattenbaugruppe der weiteren Vibrationsdämpfungsplatte aus einem elastischen Material aufweist.

Bei der Montage wird diese Vibrationsdämpfungsplatte zwischen der Rückplattenbaugruppe und der Tür angeordnet. Vibrationen der Aktuierung können so gedämpft und auch die Schallverbreitung im Wege von Körperschall gedämpft werden.

Insbesondere kann vorgesehen sein, dass das elastische Material ein Elastomer ist.

Es stellt die gewünschten Dämpfungseigenschaften zur Verfügung und kann gleichzeitig einen festen Sitz der Rückplattenbaugruppe an der Tür bereitstellen. Ein Verrutschen bzw. Verschieben auf der Tür kann somit vermieden werden, des Weiteren auch Beschädigung der Tür beispielsweise durch Zerkratzen.

In einer weiteren Ausgestaltung kann vorgesehen sein, dass die Rückplattenbaugruppe in einem zusammengebauten Zustand eine Länge und eine Breite aufweist, wobei die Länge größer als die Breite ist, und wobei die Längsmittelebene entlang der Länge der Rückplattenbaugruppe und parallel zu einer Bohrungsrichtung der Schraubenlöcher aufgespannt ist und die Breite der Rückplattenbaugruppe halbiert.

Wie bereits eingangs ausgeführt, ist auf diese Weise die Längsmittelebene eindeutig in der Rückplattenbaugruppe positioniert. Die Langlöcher und das erste Schraubenloch des ersten Lochpaars liegen damit in der Breitenrichtung genau in der Mitte der Rückplattenbaugruppe. Die Schraubenlöcher des zweiten Lochpaars und des vierten Lochpaars sind symmetrisch hinsichtlich der Längsmittelebene angeordnet. Auch das vierte Schraubenloch und das fünfte Schraubenloch des dritten Lochpaars liegen genau mittig auf der Breite der Rückplattenbaugruppe.

In einer weiteren Ausgestaltung kann vorgesehen sein, dass jede der konischen Einsatzscheiben eine Vorderseite, eine der Vorderseite entgegengesetzte Rückseite und eine konische Innenumfangsfläche, die sich ausgehend von der Vorderseite hin zu der Rückseite verjüngt, aufweist, und wobei die Rückseite eine ebene Auflagefläche ausbildet.

Mit anderen Worten bildet die konische Einsatzscheibe also eine Hülse bzw. kurze Hülse aus, deren Innenumfangsfläche sich konisch verjüngt. Die Innenumfangsfläche verjüngt sich konisch in axialer Richtung der Hülse bzw. der Einsatzscheibe. Auf diese Weise kann ein Senkkopf einer Befestigungsschraube vollflächig an der Innenumfangsfläche anliegen, wodurch bei gegebenem Durchmesser eine große Fläche zur Kraftübertragung bereitgestellt ist. Des Weiteren ist eine Selbstzentrierung der Befestigungsschrauben in der konischen Einsatzscheibe gegeben.

Die voranstehend benannten Ausgestaltungen können die Rückplattenbaugruppe gemäß dem ersten Aspekt, aber auch jeder der Rückplattenbaugruppen gemäß dem zweiten oder dritten Aspekt oder den Türbeschlag gemäß dem vierten Aspekt weiterbilden.

Ausführungsformen sind in der Zeichnung dargestellt und werden in der nachfolgenden Beschreibung näher erläutert. Es zeigen:
- Fig. 1: eine schematische Querschnittsansicht einer Tür mit einem Türbeschlag;
- Fig. 2: eine isometrische Vorderansicht eines Türbeschlags;
- Fig. 3: eine isometrische Rückansicht des Türbeschlags in Fig. 2, in der die Rückplattenbaugruppe erkennbar ist;
- Fig. 4: einen Türbeschlag gemäß einer Ausführungsform mit einer erstmöglichen Einbausituation an einem Schließzylinder;
- Fig. 5: eine erste Ausführungsform einer Rückplattenbaugruppe in einer Explosionsansicht;
- Fig. 6A: ein Rückplattenelement der Rückplattenbaugruppe in Fig. 5 in einer Frontalansicht;
- Fig. 6B: eine Seitenansicht des Rückplattenelements in Fig. 6A;
- Fig. 6C: eine Rückansicht des Rückplattenelements in Fig. 6A;
- Fig. 7: eine zusammengebaute Perspektivansicht der Rückplattenbaugruppe in Fig. 5 mit Befestigungsschrauben für verschiedene Einbausituationen;
- Fig. 8: eine zweite Ausführungsform einer Rückplattenbaugruppe in einer Explosionsansicht;
- Fig. 9A: eine Frontalansicht des zusammengesetzten Rückplattenelements der Verstärkungsplatte in Fig. 8;
- Fig. 9B: eine Seitenansicht des Rückplattenelements und der Verstärkungsplatte in Fig. 9A;
- Fig. 9C: eine Rückansicht des Rückplattenelements und der Verstärkungsplatte in Fig. 9A;
- Fig. 10: eine isometrische Ansicht eines zusammengebauten Zustands der Rückplattenbaugruppe in Fig. 8 mit Befestigungsschrauben in Position verschiedener Einbaulagen;
- Fig. 11A: eine Vorderansicht einer konischen Einsatzscheibe;
- Fig. 11B: eine Querschnittsansicht entlang einer Linie 11B-11B in Fig. 11A;
- Fig. 11C: eine isometrische Vorderansicht der konischen Einsatzscheibe; und
- bis 11D: eine isometrische Rückansicht der konischen Einsatzscheibe.

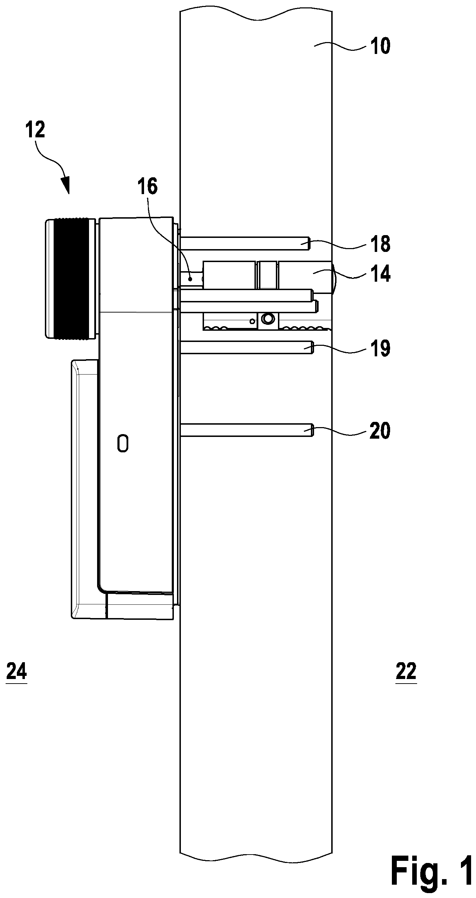

Fig. 1 zeigt in einer schematischen Seitenansicht eine Tür 10, an der ein erfindungsgemäßer Türbeschlag 12 angebracht ist. Die Tür weist eine Innenseite 22 und eine Außenseite 24 auf. An der Tür ist ein Schließzylinder 14 angebracht. Von der Innenseite 22 kann die Tür daher üblicherweise mittels eines mechanischen Schlüssels geöffnet werden. Von der Außenseite ist der Türbeschlag 12 als elektronisches Türschloss bereitgestellt. Über eine Welle 16 ist der Türbeschlag mit einer Hälfte des Schließzylinders 14 gekoppelt.

Zum Befestigen des Türbeschlags an der Tür sind schematisch in dieser Ansicht drei Befestigungselemente 18, 19, 20 dargestellt. Bei denen kann es sich beispielsweise um Befestigungsschrauben mit Senkkopf handeln. Die Befestigungsschrauben dienen zum Befestigen des Türbeschlags 12 in entsprechenden Anbringungspunkten in der Tür 10. Die Befestigungsschrauben können Senkkopfschrauben mit dem Gewinde M5 oder M6 sein. Des Weiteren können auch eine Senkkopfschrauben mit Gewinde M8 genutzt werden.

Es versteht sich, dass der grundsätzliche Aufbau Aufwand wie in Fig. 1 aufweisen kann. Beispielsweise kann sowohl auf der Innenseite 22 als auch auf der Außenseite der Tür 24 jeweils ein elektronischer Türbeschlag vorgesehen sein.

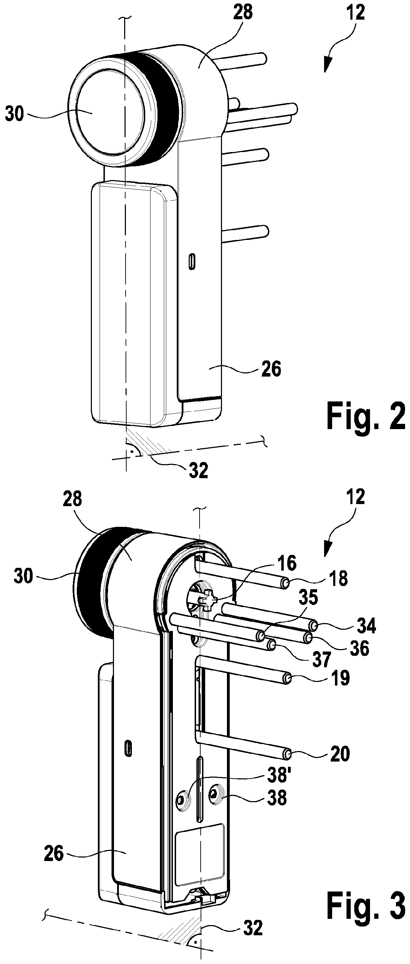

Fig. 2 zeigt eine isometrische Ansicht des Türbeschlags 12. Der Türbeschlag 12 weist einen länglichen Grundkörper 26 auf mit einem im Wesentlichen kreisförmigen Kopfabschnitt 28. An diesem Kopfabschnitt 28 ist ein Drehaktuator 30 vorgesehen, mittels dem nach erfolgreicher Entsperrung die Welle 16 gedreht und die Tür 10 geöffnet werden kann. Zum Entsperren können übliche Einrichtungen vorgesehen sein, beispielsweise drahtlose Kommunikation, etwa über RFID-Kommunikationssysteme, drahtgebundene Kommunikation, aber auch Eingabemittel wie etwa Tastenfelder, Gesichtserkennungen oder Fingerabdrucksensoren.

Eine Längsmittelebene 32 verläuft über eine halbe Breite des Türbeschlags 12 und wird entlang einer Längsrichtung des länglichen Grundkörpers 26 sowie in die Tiefenrichtung aufgespannt.

In Fig. 3 ist eine Rückseite des Türbeschlags 12 in Fig. 2 dargestellt.

Dargestellt sind in der Fig. 3 neben den Befestigungsschrauben 18, 19, 20 weitere Befestigungsschrauben 36, 37, 34, 35 und weitere Befestigungsmöglichkeiten 38, 38'. Nicht alle dieser Befestigungsschrauben bzw. Befestigungsmöglichkeiten werden in der Praxis genutzt. Die Darstellung dient lediglich zu Illustrationszwecken, um die verschiedenen Möglichkeiten der Rückplattenbaugruppe der vorliegenden Erfindung darzustellen. Die weiteren Befestigungsmöglichkeiten 38, 38' können beispielsweise zur direkten Anbringung an einem Türblatt genutzt werden. Die Befestigungsschrauben 36, 37 können zur Anbringung an einen runden Türbeschlag mit "spanischem" Maß, d.h. einem Schraubenabschnitt 26, 2 mm genutzt werden. Die Befestigungsschrauben 18, 19 können zur Anbringung Anbringungspunkte eines ovalen Türbeschlags mit dem Schraubenabstand von 50 mm genutzt werden. Die Befestigungsschrauben 18, 19, 20 können zur Anbringung an Anbringungspunkte von Sicherheitstürbeschlägen verschiedener Hersteller genutzt werden. Es können zwei der Befestigungsschrauben 18, 19, 20 oder alle drei Befestigungsschrauben 18, 19, 20 Anwendung finden. Die Befestigungsschrauben 34 und 35 können zur Anbringung an einem runden Türbeschlag mit dem Schraubenabstand von 38 mm genutzt werden. Es kann auch eine der Befestigungsschrauben in einem ersten Langloch 58 Anwendung finden. Das Langloch 58 dient dann dazu, die untere Befestigungsschraube eines ovalen Türbeschlags mit einem Schraubenabstand 50 mm auszunehmen, oder flexibel je nach Längenausführung eines Langschildschutzbeschlags nur dessen untere Befestigungsschraube in der Länge des Langloches 58 aufzunehmen. Insbesondere kann dabei, wie im Folgenden noch ausgeführt, eine konische Einsatzscheibe in dem Langloch 58 oder nur in dem Langloch 58 genutzt werden.

Auf diese Weise ist eine hohe Flexibilität in der Anbringung gewährleistet. Verschiedene Arten von Türbeschlägen können auf diese Weise durch den Türbeschlag 12 ersetzt werden und die dabei vorhandenen Anbringungspunkte genutzt werden.

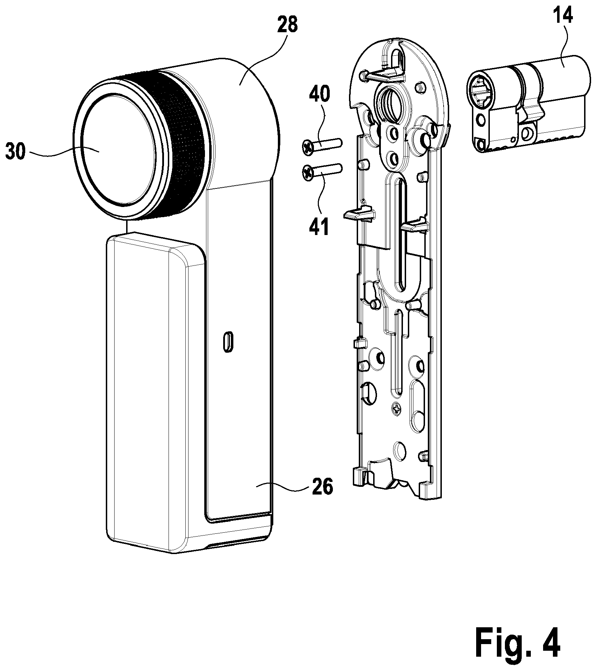

Fig. 4 zeigt eine weitere Anbringungsmöglichkeit, wie man sie beispielsweise zur dritten Anbringung eines Schließzylinders verwenden kann, beispielsweise ist diese Anbringungsform auch wie in der Einbausituation der Fig. 1 anstatt der Befestigungsschrauben 18, 19, 20 möglich. Hierzu werden zwei Befestigungsschrauben 40, 41 genutzt, die vertikal übereinanderliegend in der Längsmittelebene 32 angeordnet und in den Schließzylinder 14 eingeschraubt werden.

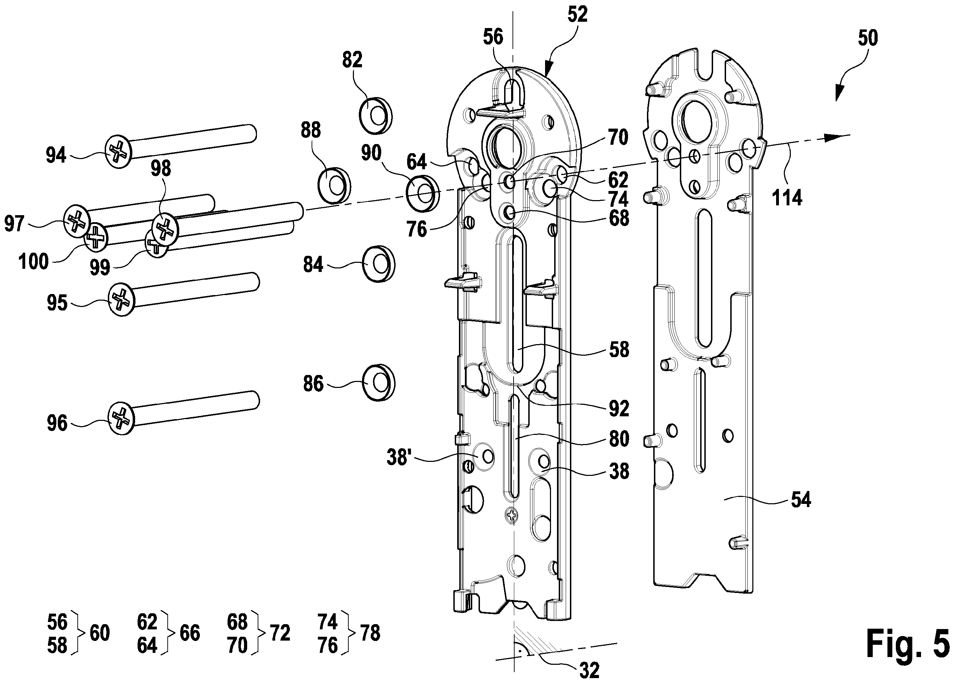

Fig. 5 zeigt eine erste Ausführungsform einer Rückplattenbaugruppe 50 gemäß der vorliegenden Erfindung. Die Rückplattenbaugruppe weist ein Rückplattenelement 52 auf. In der dargestellten Ausführungsform ist dieses einstückig ausgeführt. Es kann beispielsweise gegossen werden. Beispielsweise kann das Rückplattenelement 52 durch Zinkdruckgießen hergestellt werden. Mit dem Bezugszeichen 54 ist eine Vibrationsdämpfungsplatte bezeichnet. Diese ist aus einem elastischen Material, beispielsweise einem Elastomer, gefertigt. Das Vibrationsdämpfungselement weist korrespondierende Aussparungen, die mit Schließzylindern bzw. der Welle 16 und den verschiedenen Befestigungsschrauben 18, 19, 20, 34-38 auf durch die Vibrationsdämpfungsplatte geführt und mit der Tür verschraubt werden können. Die Vibrationsdämpfungsplatte dämpft dann zwischen der Plattenbaugruppe und der Tür Vibrationen.

Das Rückplattenelement 52 weist ein erstes Schraubenloch 56 und ein erstes Langloch 58 auf. Diese bilden ein erstes Lochpaar 60. Das Langloch erstreckt sich entlang der Längsmittelebene 32. Das erste Schraubenloch 56 ist ebenfalls auf der Längsmittelebene 32 angeordnet.

Des Weiteren weist das Rückplattenelement 52 ein zweites Schraubenloch 62 und ein drittes Schraubenloch 64 auf. Diese liegen einander bezüglich der Längsmittelebene 32 gegenüber.

Das zweite Schraubenloch 62 und das dritte Schraubenloch 64 bilden ein zweites Lochpaar 66.

Ein viertes Schraubenloch 68 und ein fünftes Schraubenloch 70 liegen beide auf der Längsmittelebene 32 und bilden ein drittes Lochpaar 72 aus.

Ein sechstes Schraubenloch 74 und ein siebtes Schraubenloch 76 bilden ein viertes Lochpaar 78 aus. Das sechste Schraubenloch 74 und das siebte Schraubenloch 76 liegen einander bezüglich der Längsmittelebene 32 gegenüber. Ein Abstand zwischen dem sechsten Schraubenloch 74 und dem siebten Schraubenloch 76 ist geringer als ein Abstand zwischen dem zweiten Schraubenloch 62 und dem dritten Schraubenloch 64.

Das vierte Schraubenloch 68 und das fünfte Schraubenloch 70 liegen zwischen dem ersten Schraubenloch 56 und dem ersten Langloch 58 auf der Längsmittelebene 32.

Des Weiteren ist ein zweites Langloch 80 vorgesehen. Dieses liegt auf der Längsmittelebene 32 bzw. erstreckt sich entlang der Längsmittelebene 32. Es ist auf der dem ersten Schraubenloch 56 abgewandten Seite des Langlochs 58 angeordnet. Zwischen dem ersten Langloch 58 und dem zweiten Langloch 80 erstreckt sich ein Steg 92.

Je nach Anbringungsart kann ein oder mehrere konische Einsatzscheiben 82, 84, 86, 88, 90 vorgesehen sein. Die konische Einsatzscheibe 82 ist dazu vorgesehen, an dem ersten Schraubenloch 56 angeordnet zu werden. Die konische Einsatzscheibe 88 ist dazu vorgesehen, in dem Schraubenloch 64 angeordnet zu werden. Die konische Einsatzscheibe 90 ist dazu vorgesehen, in dem Schraubenloch 62 angeordnet zu werden. Die konischen Einsatzscheiben 84 und 86 sind dazu vorgesehen, im ersten Langloch 58 angeordnet zu werden.

Zur Befestigung können dann Befestigungsschrauben 94-100 dienen. Bei diesen handelt es sich jeweils um Senkkopfschrauben. Die Befestigungsschrauben 94-100 können Senkkopfschrauben mit dem Gewinde M5 oder M6 sein. Die konischen Einsatzscheiben 82, 84, 86, 88, 90 sind entsprechend an die Schraubenkopfgröße angepasst.

Die Befestigungsschraube 94 kann beispielsweise die Befestigungsschraube 18 der Fig. 1 bis 3 ausbilden. Es wird die Befestigungsschraube 94 durch die konische Einsatzscheibe 82 durch das Schraubenloch 86 geführt. Entsprechend kann die Befestigungsschraube 95 wie die Befestigungsschraube 19 der Fig. 1 durch die konische Einsatzscheibe 84 geführt sein. Der Befestigungsschraube 96 kann wie die Befestigungsschraube 20 der Fig. 3 durch die konische Einsatzscheibe 86 geführt sein.

Die Befestigungsschrauben 97 und 98 können entsprechend der Befestigungsschrauben 34 und 35 der Fig. 3 ausbilden. Sie werden dafür durch die konischen Einsatzscheiben 88 und 90 geführt. Die Befestigungsschrauben 99 und 100 können die Befestigungsschrauben 36 und 37 der Fig. 3 ausbilden.

Entsprechende Befestigungsschrauben können vorgesehen sein, um durch die Schraubenlöcher 68 und 70 geführt und in der Fig. 4 dargestellt mit dem Schließzylinder verschraubt zu werden, wie in der Fig. 4 dargestellt.

Entsprechend sind auch die Dimensionierungen wie in Fig. 1 und wie in Fig. 3 geschildert vorgesehen. Ein Maß von im Schraubenmittelpunkt in der obersten Position in dem Längenloch 58, und der Befestigungsschraube 95 zu dem ersten Schraubenloch 56 gedreht 50 mm. Die Entfernung zwischen den Schraubenlöchern 74 und 76 beträgt 26,2 mm. Die Entfernung zwischen den Schraubenlöchern 62 und 64 beträgt 38 mm. Die Abstände gelten jeweils von Lochmittelpunkt zu Lochmittelpunkt.

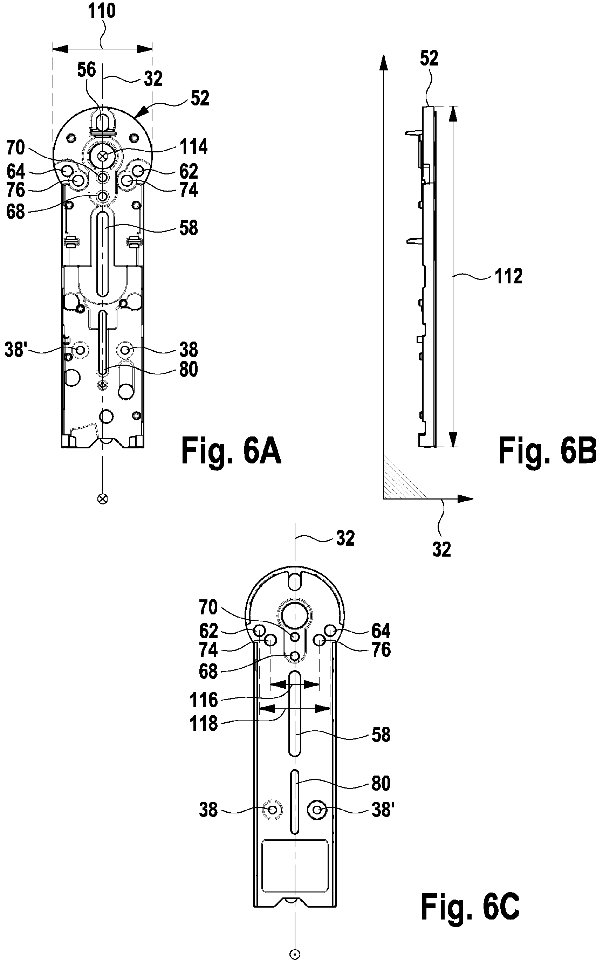

Die Fig. 6A bis 6C zeigen das Rückplattenelement 52 in der Fig. 6A in einer Draufsicht, in der Fig. 6B in einer Seitenansicht und in der Fig. 6C in einer Rückansicht. Eingezeichnet sind die maximale Breite 110 des Rückplattenelements. Diese Breite 110 wird durch die Längsmittelebene 32 halbiert. Eine Länge des Rückplattenelements ist in der Fig. B mit dem Bezugszeichen 112 gekennzeichnet. Eine Bohrungsrichtung bzw. die Richtung, in der sich die Befestigungsschrauben 94-100 im eingebauten Zustand erstrecken, ist mit dem Bezugszeichen 114 gekennzeichnet. Die Längsmittelebene 32 wird durch diese Richtung 114 und die Längsrichtung 112 aufgespannt. Sie liegt dann genau auf der Hälfte der Breite 110.

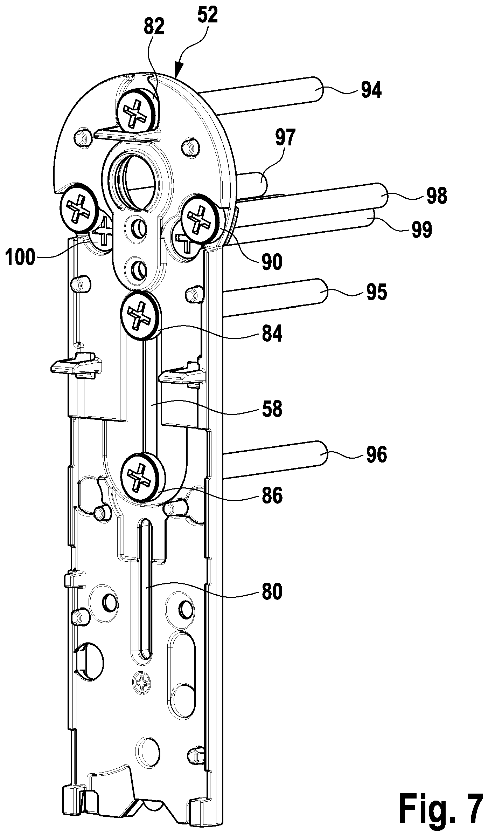

Wie bereits voranstehend ausgeführt sind, wie in der Fig. 6C eingezeichnet, der Abstand 116 das Maß zwischen dem sechsten Schraubenloch und dem siebten Schraubenloch, jeweils von Mittelpunkt zu Mittelpunkt. Es beträgt 26,2 mm. Das Maß 116 ist geringer als das Maß 118, das der Abstand von Mittelpunkt des zweiten Schraubenlochs 62 zu dem dritten Schraubenloch 64 angibt. Dieses Maß beträgt 38 mm. Der Abstand von dem ersten Schraubenloch 56 zu dem oberen Ende des Schraubenlochs 58 in der Ansicht der Figuren 6A und 6C beträgt 50 mm. Fig. 7 zeigt den zusammengebauten Zustand der Explosionsansicht in Fig. 5.

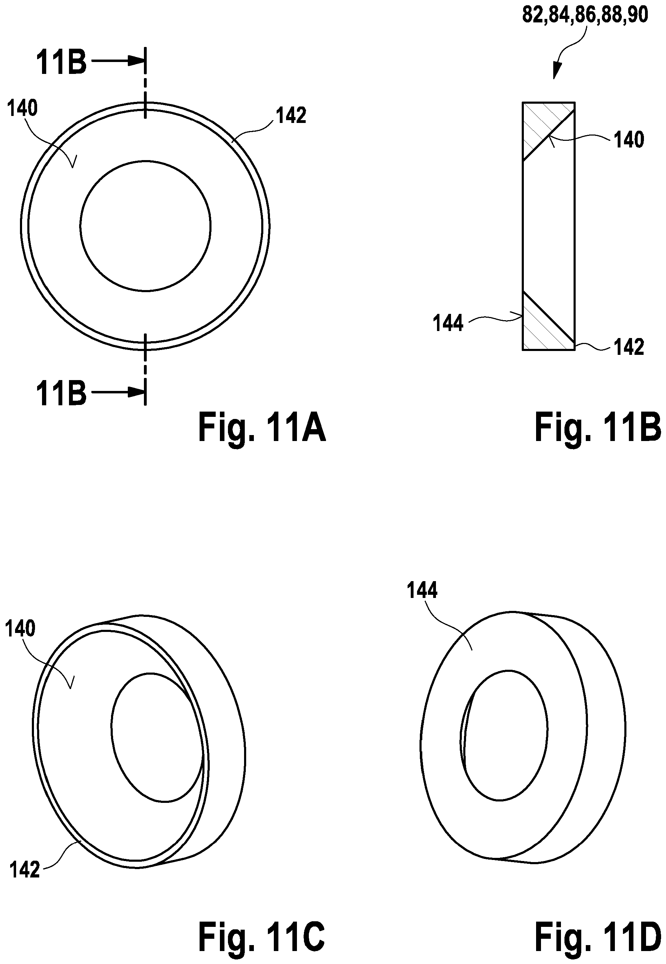

Eine konische Einsatzscheibe ist im Detail in den Figuren 11A bis 11D dargestellt. Insbesondere ist auch mit Blick auf die Figuren 11A bis 11D zu erkennen, dass die Einsatzscheiben 82, 84, 86, 88, 90 jeweils an ihrer Innenumfangsfläche 140 derart konisch ausgebildet sind, dass die Befestigungsschrauben 94-100 mit ihrem Senkkopf vollständig in der konischen Innenfläche der jeweiligen Einsatzscheibe zu liegen kommen. Der Senkkopf kann dabei vollständig in die Einsatzscheibe eintreten und liegt mit seiner konischen Außenfläche vollständig an der konischen Innenumfangsfläche der jeweiligen Einsatzscheibe an. Auf ihrer Rückseite 144, d.h. der dem konischen Senkkopf der jeweiligen Befestigungsschraube abgewandten Seite, ist die jeweilige konische Einsatzscheibe flach und kann daher auf ein das jeweilige Schraubenloch bzw. Langloch umgebenden flachen Umrandungsfläche aufliegen. Aufgrund dieser Ausgestaltung wird nicht nur eine Selbstzentrierung der jeweiligen Befestigungsschrauben erreicht, und die Flächenpressung zwischen dem Senkkopf in die Rückplattenbaugruppe wird wesentlich verbessert. Der eine Senkkopf, mit dem die Fläche in der konischen Einsatzscheibe aufliegen kann, werden die wirkenden Kräfte über die gesamte konische Fläche des Senkkopfs verteilt auf die Einsatzscheibe übertragen. Die konische Einsatzscheibe ist im hochfesten Material, beispielsweise gehärtetem Stahl, ausgebildet und kann diese Kräfte daher aufnehmen und über ihre glatte Rückfläche dann auf das Rückplattenelement 52 übertragen.

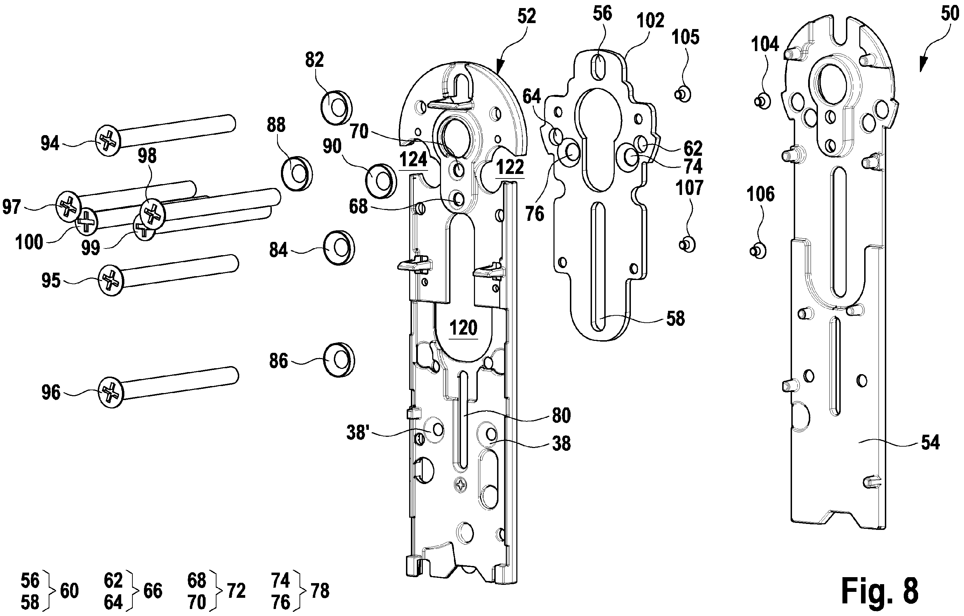

Fig. 8 zeigt eine zweite Ausführungsform der Rückplattenbaugruppe 50. Gleiche Elemente sind mit gleichen Bezugszeichen gekennzeichnet und werden im Folgenden daher nicht erneut detailliert erläutert.

Diese zweite Ausführungsform unterscheidet sich von der ersten Ausführungsform dadurch, dass das Rückplattenelement 52 nicht sämtliche Schraubenlöcher aufweist. Es ist zusätzlich eine Verstärkungsplatte 102 vorgesehen, die mittels Schrauben 104, 105, 106, 107 mit dem Rückplattenelement 52 verschraubt werden kann. Die Verstärkungsplatte 102 ist dann zwischen dem Rückplattenelement 52 und der Vibrationsdämpfungsplatte 54 angeordnet. Die Vibrationsdämpfungsplatte 54 der zweiten Ausführungsform kann die gleiche Vibrationsdämpfungsplatte wie die Vibrationsdämpfungsplatte der ersten Ausführungsform sein.

Die Verstärkungsplatte 102 ist beispielsweise aus einem gehärteten Stahl ausgebildet. Die Verstärkungsplatte 102 weist das erste Schraubenloch 56 und das erste Langloch 58 auf, also das erste Lochpaar 60. Des Weiteren weist die Verstärkungsplatte dieser Ausführungsform das zweite Schraubenloch 62 und das dritte Schraubenloch 64 auf, also das zweite Lochpaar 66. Des Weiteren weist die Verstärkungsplatte 102 das sechste Schraubenloch 74 und das siebte Schraubenloch 76 auf, also das vierte Lochpaar 48.

In diesen Schraubenlöchern bzw. dem Langloch 58 entsprechenden Bereichen 120, 122 und 124 weist das Rückplattenelement 52 Aussparungen auf. Die konischen Einsatzscheiben 82, 84, 86 bzw. 88, 89 liegen daher mit ihrer flachen Rückseite direkt auf der Verstärkungsplatte 102 auf. Die konische Innenumfangsfläche 140 auf der Vorderseite kommt in vollständige Anlage mit der konischen Fläche der Senkköpfe der Befestigungsschrauben 94-100.

Eine konische Einsatzscheibe 82-90 ist somit eine Einsatzscheibe mit einer konischen Innenumfangsfläche. Die konische Innenumfangsfläche weitet sich in eine Richtung auf, hier hin zu der Vorderseite, d.h. der dem Senkkopf der Befestigungsschrauben 94-100 zugewandten Seite. Die Befestigungsschrauben 94-100 können Senkkopfschrauben mit dem Gewinde M5 oder M6 sein. Die konischen Einsatzscheiben 82, 84, 86, 88, 90 sind entsprechend an die Schraubenkopfgröße angepasst. Die entgegengesetzte Rückseite der jeweiligen Einsatzscheibe, an der die konische Innenumfangsfläche den kleinsten Durchmesser hat, ist flach ausgebildet, so dass sie auf der flachen Oberfläche der Verstärkungsplatte 102 glatt bzw. flach aufliegen kann.

Auf diese Weise wird über die Verstärkungsplatte 102 eine hohe Festigkeit erzielt, die insbesondere in der zum Testen nach DIN EN 1906:2012 die Kriterien der Gebrauchsklasse 2 erfüllen kann. Derartige Behelfsbefestigungen können beispielsweise die erste Lochpackung, d.h. die Schrauben 94 und 95 genutzt werden oder beispielsweise die Schrauben 97 und 98. Für verschiedene andere Anwendungsarten zum Austausch bereits vorhandener Sicherheitstürbeschläge, für die Schrauben 94 und 96 oder alle drei Schrauben 94, 95 und 96 genutzt werden.

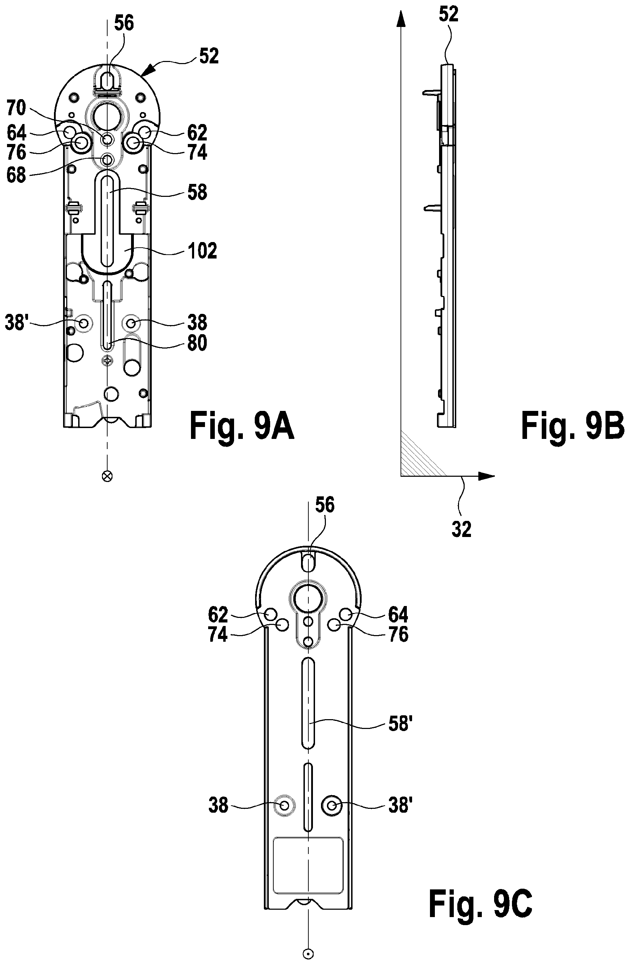

Die Figuren 9A bis 9C zeigen zusammengesetzt das Rückplattenelement 52 und die Verstärkungsplatte 102 in der Fig. 9A in der Draufsicht, in der Fig. 9B in der Seitenansicht und in der Fig. 9C in der Rückansicht. Zusammengesetzt ergibt sich ein Aufbau, der im Wesentlichen dem Rückplattenelement der ersten Ausführungsform in den Fig. 6A-6C entspricht. Der Unterschied besteht in der erhöhten Festigkeit in der Umgebung rund um das erste Langloch 58 des ersten Schraubenlochs 56 und insbesondere des zweiten Schraubenlochs 62 und des dritten Schraubenlochs 64.

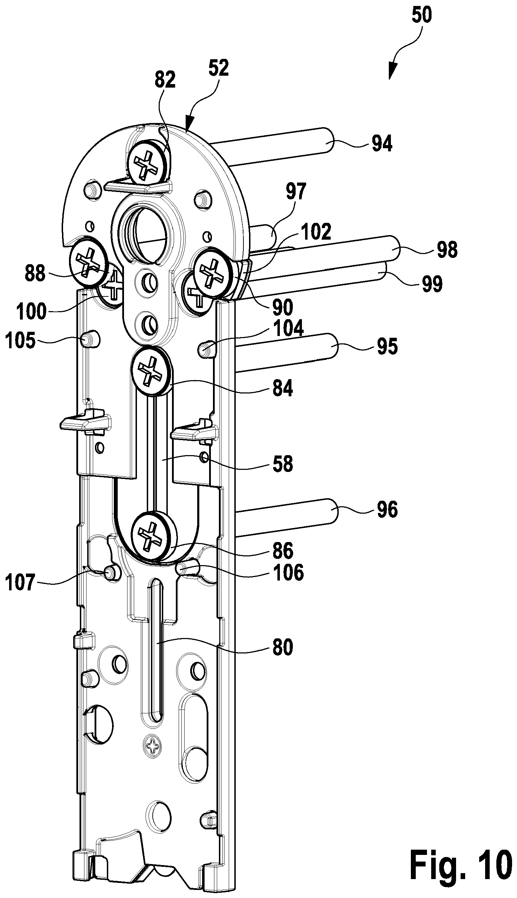

Fig. 10 zeigt die Rückplattenbaugruppe 50 der zweiten Ausführungsform in einem zusammengebauten Zustand. Dort ist zu erkennen, dass der zusammengebaute Zustand dem der ersten Ausführungsform in der Fig. 6 ähnelt. Deutlich zu erkennen sind die Aussparungsrückplattenelemente 52, so dass die konischen Einsatzscheiben 82, 84, 86, 88, 90 durch die ausgesparten Bereiche 120, 122, 124 des Rückplattenelements 52 hindurch unmittelbar auf der Verstärkungsplatte 102 zur Anlage gelangen können. Sämtliche Eigenschaften der Plattenbaugruppe der ersten Ausführungsform, insbesondere die Flexibilität hinsichtlich der Anbringungspunkte zur Kompatibilität mit allen genannten Einbausituationen, bleiben erhalten.

## Patentansprüche

1. Rückplattenbaugruppe (50) für einen Türbeschlag (12), mit:
einem ersten Lochpaar (60), wobei das erste Lochpaar (60) von einem ersten Langloch (58) und einem ersten Schraubenloch (56) gebildet ist, wobei sich das erste Langloch (58) entlang einer Längsmittelebene (32) der Rückplattenbaugruppe (50) erstreckt, und wobei das erste Schraubenloch (56) auf der Längsmittelebene (32) angeordnet ist,
einem zweiten Lochpaar (66), wobei das zweite Lochpaar (66) von einem zweiten Schraubenloch (62) und einem dritten Schraubenloch (64) gebildet ist, wobei das zweite Schraubenloch (62) und das dritte Schraubenloch (64) einander bezüglich der Längsmittelebene (32) gegenüberliegen,
einem dritten Lochpaar (72), wobei das dritte Lochpaar (72) von einem vierten Schraubenloch (68) und einem fünften Schraubenloch (70) gebildet ist, wobei das vierte Schraubenloch (68) und das fünfte Schraubenloch (70) auf der Längsmittelebene (32) und zwischen dem ersten Schraubenloch (56) und dem ersten Langloch (58) angeordnet sind,
einem vierten Lochpaar (78), wobei das vierte Lochpaar (78) von einem sechsten Schraubenloch (74) und einem siebten Schraubenloch (76) gebildet ist, wobei das sechste Schraubenloch (74) und das siebte Schraubenloch (76) einander bezüglich der Längsmittelebene (32) gegenüberliegen, und wobei ein Abstand (116) zwischen dem sechsten Schraubenloch (74) und dem siebten Schraubenloch (76) kleiner ist als ein Abstand zwischen (118) dem zweiten Schraubenloch (62) und dem dritten Schraubenloch (64), und
einem zweiten Langloch (80), das sich entlang der Längsmittelebene (32) der Rückplattenbaugruppe (50) erstreckt, wobei das zweite Langloch (80) auf einer dem ersten Schraubenloch (56) abgewandten Seite des ersten Langlochs (58) angeordnet ist.

2. Rückplattenbaugruppe (50) nach Anspruch 1, **dadurch gekennzeichnet, dass** die Rückplattenbaugruppe (50) ein Rückplattenelement (52) aufweist, das einstückig ausgebildet ist, und wobei das Rückplattenelement (52) das erste Lochpaar (60), das zweite Lochpaar (66), das dritte Lochpaar (72) und das vierte Lochpaar (78) aufweist.

3. Rückplattenbaugruppe (50) nach Anspruch 1, **dadurch gekennzeichnet, dass** die Rückplattenbaugruppe (50) ein Rückplattenelement (52) und eine Verstärkungsplatte (102) aufweist, wobei die Verstärkungsplatte (102) an dem Rückplattenelement (52) befestigt ist, wobei die Verstärkungsplatte (102) zumindest das erste Langloch (58) des ersten Lochpaars (60) und das zweite Lochpaar (66) aufweist, wobei das Rückplattenelement (52) das erste Schraubenloch (56) des ersten Lochpaars (60) und das dritte Lochpaar (72) aufweist, und wobei das Rückplattenelement (52) zumindest in Bereichen (120, 122, 124), die mit dem ersten Langloch (58) des ersten Lochpaars (60) und dem zweiten Lochpaar (66) fluchten, ausgespart ist, insbesondere wobei die Verstärkungsplatte (102) des Weiteren das vierte Lochpaar (78) aufweist, wobei das Rückplattenelement (52) in Bereichen (120, 122, 124), die mit dem vierten Lochpaar (78) fluchten, ausgespart ist.

4. Rückplattenbaugruppe (50) nach Anspruch 3, **dadurch gekennzeichnet, dass** die Verstärkungsplatte (102) an dem Rückplattenelement (52) mittels einer Mehrzahl von Schrauben (104, 105, 106, 107) befestigt ist.

5. Rückplattenbaugruppe (50) nach einem der Ansprüche 1 bis 4, **dadurch gekennzeichnet, dass** die Rückplattenbaugruppe (50) des Weiteren mindestens eine konische Einsatzscheibe (82-90) aufweist.

6. Rückplattenbaugruppe (50) nach Anspruch 5, **dadurch gekennzeichnet, dass** ein erstes Paar von konischen Einsatzscheiben (88, 90) in dem zweiten Lochpaar (66) angeordnet ist.

7. Rückplattenbaugruppe (50) nach Anspruch 5, **dadurch gekennzeichnet, dass** ein erstes Paar von konischen Einsatzscheiben (82, 84; 82, 86) in dem ersten Lochpaar (60) angeordnet ist, insbesondere wobei ein zweites Paar von konischen Einsatzscheiben in dem ersten Lochpaar angeordnet ist.

8. Rückplattenbaugruppe (50) nach Anspruch 7, **dadurch gekennzeichnet, dass** in dem ersten Langloch (58) zusätzlich zu einer konischen Einsatzscheibe (82) in dem ersten Schraubenloch und einer konischen Einsatzscheibe (84) in dem ersten Langloch (58) eine weitere konische Einsatzscheibe (86) in dem ersten Langloch (58) angeordnet ist.

9. Rückplattenbaugruppe (50) nach einem der Ansprüche 1 bis 8, **dadurch gekennzeichnet, dass** zwischen dem ersten Langloch (58) und dem zweiten Langloch (80) ein Steg (92) ausgebildet ist.

10. Rückplattenbaugruppe (50) nach einem der Ansprüche 2 bis 9, **dadurch gekennzeichnet, dass** das Rückplattenelement (52) aus einem Material hergestellt ist, dass eine Zugfestigkeit von 100 bis 350 MPa aufweist, insbesondere wobei das Rückplattenelement (52) aus Zink druckgegossen ist.

11. Rückplattenbaugruppe (50) nach einem der Ansprüche 3 bis 10, **dadurch gekennzeichnet, dass** die Verstärkungsplatte (102) aus einem Material, insbesondere aus Stahl, hergestellt ist, das eine Zugfestigkeit von mindestens 380 MPa, vorzugsweise von mehr als 560 MPa aufweist, vorzugsweise mehr als 650 MPa, weiter vorzugsweise mehr als 800 MPa, weiter vorzugsweise mehr als 1000 MPa.

12. Rückplattenbaugruppe (50) nach einem der Ansprüche 5 bis 11, **dadurch gekennzeichnet, dass** jede Einsatzscheibe aus einem Material, insbesondere aus Stahl, hergestellt ist, das eine Zugfestigkeit von mindestens 380 MPa, vorzugsweise von mehr als 560 MPa aufweist, vorzugsweise mehr als 650 MPa, weiter vorzugsweise mehr als 800 MPa, weiter vorzugsweise mehr als 1000 MPa.

13. Rückplattenbaugruppe (50) nach einem der Ansprüche 1 bis 12, **dadurch gekennzeichnet, dass** die Rückplattenbaugruppe (50) des Weiteren eine Vibrationsdämpfungsplatte aus einem elastischen Material aufweist, insbesondere wobei das elastische Material ein Elastomer ist.

14. Rückplattenbaugruppe (50) nach einem der Ansprüche 1 bis 13, **dadurch gekennzeichnet, dass** die Rückplattenbaugruppe (50) in einem zusammengebauten Zustand eine Länge (112) und eine Breite (110) aufweist, wobei die Länge (112) größer als die Breite (110) ist, und wobei die Längsmittelebene (32) entlang der Länge (112) der Rückplattenbaugruppe (50) und parallel zu einer Bohrungsrichtung (114) der Schraubenlöcher (56, 62, 64, 68, 70, 74, 76) aufgespannt ist und die Breite (110) der Rückplattenbaugruppe (50) halbiert.

15. Rückplattenbaugruppe (50) für einen Türbeschlag (12), mit:
einem ersten Lochpaar (60), wobei das erste Lochpaar (60) von einem ersten Langloch (58) und einem ersten Schraubenloch (56) gebildet ist, wobei sich das erste Langloch (58) entlang einer Längsmittelebene (32) der Rückplattenbaugruppe (50) erstreckt, und wobei das erste Schraubenloch (56) auf der Längsmittelebene (32) angeordnet ist,
einem zweiten Lochpaar (66), wobei das zweite Lochpaar (66) von einem zweiten Schraubenloch (62) und einem dritten Schraubenloch (64) gebildet ist, wobei das zweite Schraubenloch (62) und das dritte Schraubenloch (64) einander bezüglich der Längsmittelebene (32) gegenüberliegen,
einem dritten Lochpaar (72), wobei das dritte Lochpaar (72) von einem vierten Schraubenloch (68) und einem fünften Schraubenloch (70) gebildet ist, wobei das vierte Schraubenloch (68) und das fünfte Schraubenloch (70) auf der Längsmittelebene (32) und zwischen dem ersten Schraubenloch (56) und dem ersten Langloch (58) angeordnet sind, und
wobei die Rückplattenbaugruppe (50) ein Rückplattenelement (52) und eine Verstärkungsplatte (102) aufweist, wobei die Verstärkungsplatte (102) an dem Rückplattenelement (52) befestigt ist, wobei die Verstärkungsplatte (102) zumindest das erste Langloch (58) des ersten Lochpaars (60) und das zweite Lochpaar (66) aufweist, wobei das Rückplattenelement (52) das erste Schraubenloch (56) des ersten Lochpaars (60) und das dritte Lochpaar (72) aufweist, und wobei das Rückplattenelement (52) zumindest in Bereichen, die mit dem ersten Langloch (58) des ersten Lochpaars (60) und dem zweiten Lochpaar (66) fluchten, ausgespart ist.

16. Rückplattenbaugruppe (50) nach einem der Ansprüche 1 bis 15, **dadurch gekennzeichnet, dass** die Rückplattenbaugruppe (50) des Weiteren mindestens eine konische Einsatzscheibe (82-90) aufweist.

17. Rückplattenbaugruppe (50) nach einem der Ansprüche 5 bis 13 oder nach Anspruch 16, wobei jede der konischen Einsatzscheiben eine Vorderseite (142), eine der Vorderseite entgegengesetzte Rückseite (144) und eine konische Innenumfangsfläche (140), die sich ausgehend von der Vorderseite (142) hin zu der Rückseite (144) verjüngt, aufweist, und wobei die Rückseite (144) eine ebene Auflagefläche ausbildet.

18. Türbeschlag (12) mit einer Rückplattenbaugruppe (50) nach einem der Ansprüche 1 bis 17.

## Claims

1. A backplate assembly (50) for a door fitting (12) comprising:
a first pair of holes (60), wherein the first pair of holes (60) is formed by a first slot hole (58) and a first screw hole (56), wherein the first slot hole (58) extends along a longitudinal median plane (32) of the backplate assembly (50) and wherein the first screw hole (56) is located on the longitudinal median plane (32),
a second pair of holes (66), wherein the second pair of holes (66) is formed by a second screw hole (62) and a third screw hole (64), wherein the second screw hole (62) and the third screw hole (64) are opposite each other with respect to the longitudinal median plane (32),
a third pair of holes (72), wherein the third pair of holes (72) is formed by a fourth screw hole (68) and a fifth screw hole (70), wherein the fourth screw hole (68) and the fifth screw hole (70) are positioned on the longitudinal median plane (32) and between the first screw hole (56) and the first slot hole (58),
a fourth pair of holes (78), wherein the fourth pair of holes (78) is formed by a sixth screw hole (74) and a seventh screw hole (76), wherein the sixth screw hole (74) and the seventh screw hole (76) are opposite each other with respect to the longitudinal median plane (32), and wherein a distance (116) between the sixth screw hole (74) and the seventh screw hole (76) is smaller than a distance (118) between the second screw hole (62) and the third screw hole (64),
a second slot hole (80), which extends along the longitudinal median plane (32) of the backplate assembly (50) and is located on a side of the first slot hole (58) opposite the first screw hole (56).

2. The backplate assembly (50) according to claim 1, **characterized in that** the backplate assembly (50) comprises a backplate element (52) which is integrally formed, and wherein the backplate element (52) includes the first pair of holes (60), the second pair of holes (66), the third pair of holes (72), and the fourth pair of holes (78).

3. The backplate assembly (50) according to claim 1, **characterized in that** the backplate assembly (50) comprises a backplate element (52) and a reinforcement plate (102), wherein the reinforcement plate (102) is attached to the backplate element (52), wherein the reinforcement plate (102) includes at least the first slot hole (58) of the first pair of holes (60) and the second pair of holes (66), wherein the backplate element (52) includes the first screw hole (56) of the first pair of holes (60) and the third pair of holes (72), and wherein the backplate element (52) is cutout at least in areas (120, 122, 124) aligned with the first slot hole (58) of the first pair of holes (60) and the second pair of holes (66).

4. The backplate assembly (50) according to claim 3, **characterized in that** the reinforcement plate (102) is attached to the backplate element (52) using a plurality of screws (104, 105, 106, 107).

5. The backplate assembly (50) according to any of claims 1 to 4, **characterized in that** the backplate assembly (50) further comprises at least one conical insert disk (82-90).

6. The backplate assembly (50) according to claim 5, **characterized in that** a first pair of conical insert disks (88, 90) is arranged in the second pair of holes (66).

7. The backplate assembly (50) according to claim 5, **characterized in that** a first pair of conical insert disks (82, 84; 82, 86) is arranged in the first pair of holes (60), particularly wherein a second pair of conical insert disks is arranged in the first pair of holes.

8. The backplate assembly (50) according to claim 7, **characterized in that** in the first slot hole (58), in addition to a conical insert disk (82) in the first screw hole and a conical insert disk (84) in the first slot hole (58), a further conical insert disk (86) is arranged in the first slot hole (58).

9. The backplate assembly (50) according to any of claims 1 to 8, **characterized in that** a web (92) is formed between the first slot hole (58) and the second slot hole (80).

10. The backplate assembly (50) according to any of claims 2 to 9, **characterized in that** the backplate element (52) is made from a material that has a tensile strength of 100 to 350 MPa, in particular wherein the backplate element (52) is die-cast from zinc.

11. The backplate assembly (50) according to any of claims 3 to 10, **characterized in that** the reinforcement plate (102) is made from a material, in particular steel, that has a tensile strength of at least 380 MPa, preferably more than 560 MPa, further preferably more than 650 MPa, further preferably more than 800 MPa, and most preferably more than 1000 MPa.

12. The backplate assembly (50) according to any of claims 5 to 11, **characterized in that** each insert disk is made from a material, in particular steel, that has a tensile strength of at least 380 MPa, preferably more than 560 MPa, further preferably more than 650 MPa, further preferably more than 800 MPa, and most preferably more than 1000 MPa.

13. The backplate assembly (50) according to any of claims 1 to 12, **characterized in that** the backplate assembly (50) further comprises a vibration damping plate made from an elastic material, in particular wherein the elastic material is an elastomer.

14. The backplate assembly (50) according to any of claims 1 to 13, **characterized in that** the backplate assembly (50) in an assembled state has a length (112) and a width (110), wherein the length (112) is greater than the width (110), and wherein the longitudinal median plane (32) extends along the length (112) of the backplate assembly (50) and parallel to a boring direction (114) of the screw holes (56, 62, 64, 68, 70, 74, 76), and bisects the width (110) of the backplate assembly (50).

15. A backplate assembly (50) for a door fitting (12) comprising:
a first pair of holes (60), wherein the first pair of holes (60) is formed by a first slot hole (58) and a first screw hole (56), wherein the first slot hole (58) extends along a longitudinal median plane (32) of the backplate assembly (50) and wherein the first screw hole (56) is located on the longitudinal median plane (32),
a second pair of holes (66), wherein the second pair of holes (66) is formed by a second screw hole (62) and a third screw hole (64), wherein the second screw hole (62) and the third screw hole (64) are opposite each other with respect to the longitudinal median plane (32),
a third pair of holes (72), wherein the third pair of holes (72) is formed by a fourth screw hole (68) and a fifth screw hole (70), wherein the fourth screw hole (68) and the fifth screw hole (70) are positioned on the longitudinal median plane (32) and between the first screw hole (56) and the first slot hole (58), and
wherein the backplate assembly (50) comprises a backplate element (52) and a reinforcement plate (102), wherein the reinforcement plate (102) is attached to the backplate element (52), wherein the reinforcement plate (102) includes at least the first slot hole (58) of the first pair of holes (60) and the second pair of holes (66), wherein the backplate element (52) includes the first screw hole (56) of the first pair of holes (60) and the third pair of holes (72), and wherein the backplate element (52) is recessed at least in areas that align with the first slot hole (58) of the first pair of holes (60) and the second pair of holes (66).

16. The backplate assembly (50) according to any of claims 1 to 15, **characterized in that** the backplate assembly (50) further comprises at least one conical insert disk (82-90).

17. The backplate assembly (50) according to any of claims 5 to 13 or according to claim 16, wherein each of the conical insert disks has a front side (142), a back side (144) opposite the front side, and a conical internal surface (140) that tapers from the front side (142) to the back side (144), and wherein the back side (144) forms a flat bearing surface.

18. A door fitting (12) comprising a backplate assembly (50) according to any of claims 1 to 17.

## Revendications

1. Ensemble plaque arrière (50) pour une ferrure de porte (12), comportant :
une première paire de trous (60), dans lequel la première paire de trous (60) est formée par un premier trou oblong (58) et un premier trou pour vis (56), dans lequel le premier trou oblong (58) s'étend le long d'un plan médian longitudinal (32) de l'ensemble plaque arrière (50), et dans lequel le premier trou pour vis (56) est disposé sur le plan médian longitudinal (32),
une deuxième paire de trous (66), dans lequel la deuxième paire de trous (66) est formée par un deuxième trou pour vis (62) et un troisième trou pour vis (64), dans lequel le deuxième trou pour vis (62) et le troisième trou pour vis (64) sont opposés l'un à l'autre par rapport au plan médian longitudinal (32),
une troisième paire de trous (72), dans lequel la troisième paire de trous (72) est formée par un quatrième trou pour vis (68) et un cinquième trou pour vis (70), dans lequel le quatrième trou pour vis (68) et le cinquième trou pour vis (70) sont disposés sur le plan médian longitudinal (32) et entre le premier trou pour vis (56) et le premier trou oblong (58),
une quatrième paire de trous (78), dans lequel la quatrième paire de trous (78) est formée par un sixième trou pour vis (74) et un septième trou pour vis (76), dans lequel le sixième trou pour vis (74) et le septième trou pour vis (76) sont opposés l'un à l'autre par rapport au plan médian longitudinal (32), et dans lequel une distance (116) entre le sixième trou pour vis (74) et le septième trou pour vis (76) est plus petite qu'une distance entre (118) le deuxième trou pour vis (62) et le troisième trou pour vis (64), et
un second trou oblong (80) qui s'étend le long du plan médian longitudinal (32) de l'ensemble plaque arrière (50), dans lequel le second trou oblong (80) est disposé sur un côté du premier trou oblong (58) opposé au premier trou pour vis (56).

2. Ensemble plaque arrière (50) selon la revendication 1,
**caractérisé en ce que** l'ensemble plaque arrière (50) présente un élément de plaque arrière (52) qui est réalisé d'une seule pièce, et dans lequel l'élément de plaque arrière (52) présente la première paire de trous (60), la deuxième paire de trous (66), la troisième paire de trous (72) et la quatrième paire de trous (78).

3. Ensemble plaque arrière (50) selon la revendication 1,
**caractérisé en ce que** l'ensemble plaque arrière (50) présente un élément de plaque arrière (52) et une plaque de renforcement (102), dans lequel la plaque de renforcement (102) est fixée à l'élément de plaque arrière (52), dans lequel la plaque de renforcement (102) présente au moins le premier trou oblong (58) de la première paire de trous (60) et la deuxième paire de trous (66), dans lequel l'élément de plaque arrière (52) présente le premier trou pour vis (56) de la première paire de trous (60) et la troisième paire de trous (72), et dans lequel l'élément de plaque arrière (52) est évidé au moins dans des zones (120, 122, 124) qui sont alignées avec le premier trou oblong (58) de la première paire de trous (60) et la deuxième paire de trous (66), en particulier dans lequel la plaque de renforcement (102) présente en outre la quatrième paire de trous (78), dans lequel l'élément de plaque arrière (52) est évidé dans des zones (120, 122, 124) qui sont alignées avec la quatrième paire de trous (78).

4. Ensemble plaque arrière (50) selon la revendication 3,
**caractérisé en ce que** la plaque de renforcement (102) est fixée à l'élément de plaque arrière (52) au moyen d'une pluralité de vis (104, 105, 106, 107).

5. Ensemble plaque arrière (50) selon l'une des revendications 1 à 4, **caractérisé en ce que** l'ensemble plaque arrière (50) présente en outre au moins un disque d'insertion conique (82-90).

6. Ensemble plaque arrière (50) selon la revendication 5,
**caractérisé en ce qu'**une première paire de disques d'insertion coniques (88, 90) est disposée dans la deuxième paire de trous (66).

7. Ensemble plaque arrière (50) selon la revendication 5,
**caractérisé en ce qu'**une première paire de disques d'insertion coniques (82, 84 ; 82, 86) est disposée dans la première paire de trous (60), en particulier dans lequel une seconde paire de disques d'insertion coniques est disposée dans la première paire de trous.

8. Ensemble plaque arrière (50) selon la revendication 7,
**caractérisé en ce que**, dans le premier trou oblong (58), en plus d'un disque d'insertion conique (82) dans le premier trou pour vis et d'un disque d'insertion conique (84) dans le premier trou oblong (58), un autre disque d'insertion conique (86) est disposé dans le premier trou oblong (58).

9. Ensemble plaque arrière (50) selon l'une des revendications 1 à 8, **caractérisé en ce qu'**une nervure (92) est réalisée entre le premier trou oblong (58) et le second trou oblong (80).

10. Ensemble plaque arrière (50) selon l'une des revendications 2 à 9, **caractérisé en ce que** l'élément de plaque arrière (52) est fabriqué en un matériau qui présente une résistance à la traction allant de 100 à 350 MPa, en particulier dans lequel l'élément de plaque arrière (52) est moulé sous pression en zinc.

11. Ensemble plaque arrière (50) selon l'une des revendications 3 à 10, **caractérisé en ce que** la plaque de renforcement (102) est fabriquée en un matériau, en particulier en acier, qui présente une résistance à la traction d'au moins 380 MPa, de préférence supérieure à 560 MPa, de préférence supérieure à 650 MPa, plus préférablement supérieure à 800 MPa, plus préférablement supérieure à 1 000 MPa.

12. Ensemble plaque arrière (50) selon l'une des revendications 5 à 11, **caractérisé en ce que** chaque disque d'insertion est fabriqué en un matériau, en particulier en acier, qui présente une résistance à la traction d'au moins 380 MPa, de préférence supérieure à 560 MPa, de préférence supérieure à 650 MPa, plus préférablement supérieure à 800 MPa, plus préférablement supérieure à 1 000 MPa.

13. Ensemble plaque arrière (50) selon l'une des revendications 1 à 12, **caractérisé en ce que** l'ensemble plaque arrière (50) présente en outre une plaque d'amortissement des vibrations en un matériau élastique, en particulier dans lequel le matériau élastique est un élastomère.

14. Ensemble plaque arrière (50) selon l'une des revendications 1 à 13, **caractérisé en ce que** l'ensemble plaque arrière (50) présente une longueur (112) et une largeur (110) dans un état assemblé, dans lequel la longueur (112) est supérieure à la largeur (110), et dans lequel le plan médian longitudinal (32) est étiré le long de la longueur (112) de l'ensemble plaque arrière (50) et parallèlement à une direction d'alésage (114) des trous pour vis (56, 62, 64, 68, 70, 74, 76) et divise par deux la largeur (110) de l'ensemble plaque arrière (50).

15. Ensemble plaque arrière (50) pour une ferrure de porte (12), comportant :
une première paire de trous (60), dans lequel la première paire de trous (60) est formée par un premier trou oblong (58) et un premier trou pour vis (56), dans lequel le premier trou oblong (58) s'étend le long d'un plan médian longitudinal (32) de l'ensemble plaque arrière (50), et dans lequel le premier trou pour vis (56) est disposé sur le plan médian longitudinal (32),
une deuxième paire de trous (66), dans lequel la deuxième paire de trous (66) est formée par un deuxième trou pour vis (62) et un troisième trou pour vis (64), dans lequel le deuxième trou pour vis (62) et le troisième trou pour vis (64) sont opposés l'un à l'autre par rapport au plan médian longitudinal (32),
une troisième paire de trous (72), dans lequel la troisième paire de trous (72) est formée par un quatrième trou pour vis (68) et un cinquième trou pour vis (70), dans lequel le quatrième trou pour vis (68) et le cinquième trou pour vis (70) sont disposés sur le plan médian longitudinal (32) et entre le premier trou pour vis (56) et le premier trou oblong (58), et
dans lequel l'ensemble plaque arrière (50) présente un élément de plaque arrière (52) et une plaque de renforcement (102), dans lequel la plaque de renforcement (102) est fixée à l'élément de plaque arrière (52), dans lequel la plaque de renforcement (102) présente au moins le premier trou oblong (58) de la première paire de trous (60) et la deuxième paire de trous (66), dans lequel l'élément de plaque arrière (52) présente le premier trou pour vis (56) de la première paire de trous (60) et la troisième paire de trous (72), et dans lequel l'élément de plaque arrière (52) est évidé au moins dans des zones qui sont alignées avec le premier trou oblong (58) de la première paire de trous (60) et la deuxième paire de trous (66).

16. Ensemble plaque arrière (50) selon l'une des revendications 1 à 15, **caractérisé en ce que** l'ensemble plaque arrière (50) présente en outre au moins un disque d'insertion conique (82-90).

17. Ensemble plaque arrière (50) selon l'une des revendications 5 à 13 ou selon la revendication 16, dans lequel chacun des disques d'insertion coniques présente une face avant (142), une face arrière (144) opposée à la face avant, et une surface périphérique intérieure conique (140) qui se rétrécit à partir de la face avant (142) jusqu'à la face arrière (144), et dans lequel la face arrière (144) forme une surface d'appui plane.

18. Ferrure de porte (12) comportant un ensemble plaque arrière (50) selon l'une des revendications 1 à 17.
